# EUROPEAN PATENT SPECIFICATION

(11) **EP 3 606 154 B1**
(45) Date of publication and mention of the grant of the patent: **15.01.2025**
(21) Application number: 18770210.5
(22) Date of filing: 24.01.2018
(51) Int. Cl.: H04L 69/04, H04L 69/324

(54) **DATA TRANSMISSION METHOD AND TERMINAL**
DATEIÜBERTRAGUNGSVERFAHREN UND -ENDGERÄT
PROCÉDÉ ET TERMINAL DE TRANSMISSION DE DONNÉES

(30) Priority: 24.03.2017 CN 201710184712
(43) Date of publication of application: 05.02.2020
(73) Proprietor: Vivo Mobile Communication Co., Ltd., Dongguan, Guangdong 523860 (CN)
(72) Inventor: WU, Yumin, Guangdong 523860 (CN)
(74) Representative: Conti, Marco
(86) International application number: PCT/CN2018/073952
(87) International publication number: WO 2018/171328

(56) References cited:
- EP-B1- 3 533 254
- CN-A- 101 212 404
- CN-A- 102 857 356
- US-A1- 2016 381 598
- US-A1- 2016 381 598
- SAMSUNG: "NR QOS - Impact to RAN User Plane Protocol architecture", vol. RAN WG2, no. Spokane, USA; 20170117 - 20170119, 17 January 2017 (2017-01-17), XP051210617, Retrieved from the Internet <URL:http://www.3gpp.org/ftp/Meetings_3GPP_SYNC/RAN2/Docs/> [retrieved on 20170117]
- ANONYMOUS: "3GPP NR U-Plane Introduction", 1 January 2017 (2017-01-01), XP055611259, Retrieved from the Internet <URL:http://std-share.itri.org.tw/Content/Files/Event/Files/3.3GPP%20NR%20U-plane%20introduction_CCY.pdf> [retrieved on 20190806]
- CONVIDA WIRELESS: "SDAP Header Format", vol. RAN WG2, no. Quingdao, China; 20170627 - 20170629, 17 June 2017 (2017-06-17), XP051307380, Retrieved from the Internet <URL:http://www.3gpp.org/ftp/tsg_ran/WG2_RL2/TSGR2_AHs/2017_06_NR/Docs/> [retrieved on 20170617]
- LG ELECTRONICS INC: "Further discussion on new U-plane protocol layer", vol. RAN WG2, no. Athenes, Greece; 20170213 - 20170217, 12 February 2017 (2017-02-12), XP051212402, Retrieved from the Internet <URL:http://www.3gpp.org/ftp/Meetings_3GPP_SYNC/RAN2/Docs/> [retrieved on 20170212]

## Description

### TECHNICAL FIELD

The present disclosure relates to the technical field of communication applications, and in particular to a method for data transmission and a terminal.

### BACKGROUND

A quality of service (Quality of Service, QoS) indication mechanism at a network-side is introduced in 5G systems, QoS indication information of an Internet protocol (IP) data stream of a user equipment (User Equipment, UE), such as a flow ID, needs to be added to uplink and downlink data during transmission of the uplink and downlink data, and the protocol layer is located above a packet data convergence protocol (Packet Data Convergence Protocol, PDCP) layer. Therefore, after a new protocol layer (for example, Packet Data Adaption Protocol PDAP) is added above the PDCP layer, a signaling header of the new protocol needs to be added. However, a robust header compression (Robust Header Compression, RoHC) entity as a sub-module of the PDCP layer can only recognize a regular Transmission Control Protocol/Internet Protocol (TCP/IP) header, and under the premise of not adversely affecting functions of a RoHC protocol entity, there is no related solution for how to implement a header compression function under an architecture where the new protocol layer is added.

Prior art document D1 (Samsung: "NR QOS - Impact to RAN User Plane Protocol architecture", 3GPP DRAFT; R2-1700029) discloses that it is preferable to model the new NR QOS functionality as a separate layer, and appending an ASML header in front of the IP header in the PDCP SDU would complicate PDCP operation. The receiving ROHC entity will have to know where the IP packet payload stops and where the ASML header starts.

Prior art document D2 (Anonymous: "3GPP NR U-Plane Introduction", January 1, 2017, XP055611259) discloses a new QoS framework and a PDCP sublayer for the user plane.

Prior art document D3 (US 2016/0381598 A1) discloses methods and systems that allow a user to notify other users in a community group about the availability of program segments in which the other users may have an interest are provided.

### SUMMARY

The present disclosure provides a method for data transmission and a terminal, as claimed in the appended set of claims, which are used to support a header compression function in a 5G system under an architecture where a new protocol layer is added under the premise of not adversely affecting functions of a RoHC protocol entity. F it

The invention is defined by the appended set of claims.

### BRIEF DESCRIPTION OF THE DRAWINGS

In order to more clearly illustrate technical solutions in embodiments of the present disclosure or in related art, the drawings used in the description of the embodiments will be briefly described below. It is obvious that the drawings in the following description are only some embodiments of the present disclosure, and based on these the drawings, those skilled in the art can obtain other drawings without creative effort.
Fig. 1 is a flowchart of a method for data transmission according to an embodiment of the present disclosure;
Fig. 2 is a schematic diagram showing operations of a PDCP layer and a PDAP layer according to an embodiment of the present disclosure;
Fig. 3 is a schematic diagram showing operations of a PDCP layer and a PDAP layer according to an illustrative embodiment of the present disclosure not in accordance with the appended claims;
Fig. 4 is a schematic diagram showing operations of a PDCP layer and a PDAP layer according to another embodiment of the present disclosure;
Fig. 5 is a schematic diagram of operations of a PDCP layer and a PDAP layer according to another illustrative embodiment of the present disclosure not in accordance with the appended claims;
Fig. 6 is a flowchart of a method for data transmission according to another embodiment of the present disclosure;
Fig. 7 is a block structural diagram of a terminal according to an embodiment of the present disclosure;
Fig. 8 is a block structural diagram of a terminal according to another embodiment of the present disclosure;
Fig. 9 is a block structural diagram of a terminal according to another embodiment of the present disclosure;
Fig. 10 is a block structural diagram of a terminal according to another embodiment of the present disclosure;
Fig. 11 is a block structural diagram of a terminal according to another illustrative embodiment of the present disclosure not in accordance with the appended claims; and
Fig. 12 is a block structural diagram of a terminal according to another illustrative embodiment of the present disclosure not in accordance with the appended claims.

### DETAILED DESCRIPTION

The technical solutions in embodiments of the present disclosure are clearly and completely described in the following with reference to the accompanying drawings in the embodiments of the present disclosure. It is obvious that the described embodiments are a part rather all of the embodiments of the present disclosure. All other embodiments obtained by a person of ordinary skill in the art based on the embodiments of the present disclosure without creative effort shall fall within the scope of the present disclosure.

The present disclosure is aimed at a problem how to support a header compression function in a 5G system under an architecture where a new protocol layer is added, under the premise of not adversely affecting functions of a RoHC protocol entity. The present disclosure provides a method for data transmission and a terminal, so as to enable the new architecture where a new protocol layer is added to support the header compression function.

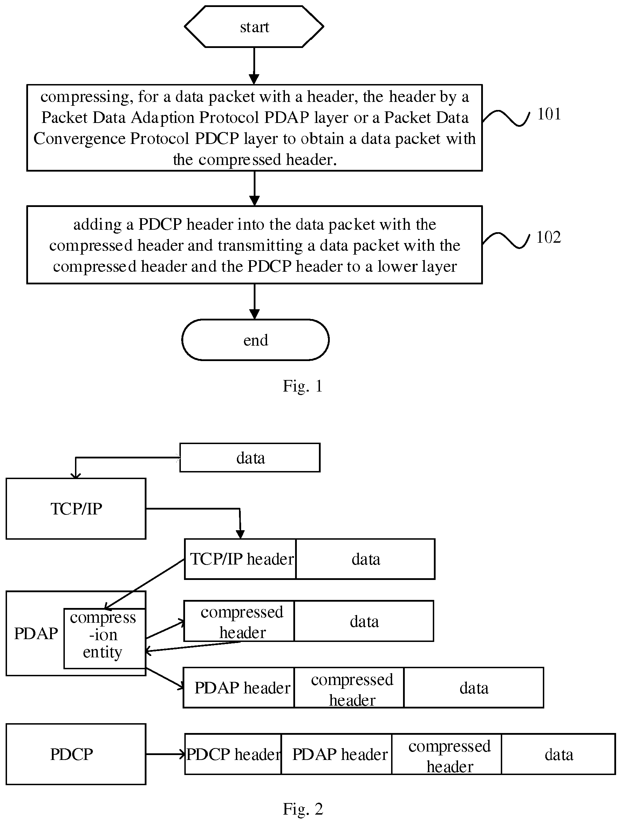

As shown in Fig. 1, an embodiment of the present disclosure provides a method for data transmission, which is applied to a transmitting end. The method includes steps 101 and 102.

Step 101: compressing, for a data packet with a header, the header by a Packet Data Adaption Protocol PDAP layer or a Packet Data Convergence Protocol PDCP layer to obtain a data packet with the compressed header.

The data packet with the header transmitted by a higher layer is obtained, and then the header is compressed by the PDAP layer or the PDCP layer. The higher layer specifically refers to a protocol layer located above the PDAP layer. For example, the higher layer is a TCP/IP data packet, and the header is specifically a TCP/IP header. The PDAP layer in the embodiments of the present disclosure is located above the PDCP layer.

Step 102: adding a PDCP header into the data packet with the compressed header and transmitting a data packet with the compressed header and the PDCP header to a lower layer.

Specifically, the PDCP layer adds the PDCP header to the data packet with the compressed header from a higher layer and transmits the data packet added with the PDCP layer to the lower layer, and the lower layer refers to a protocol layer below the PDCP layer.

In the method for data transmission according to the embodiment of the present disclosure, for the data packet with the header, the header is compressed by the PDAP layer or the PDCP layer to obtain the data packet with the compressed header; the PDCP header is added into the data packet with the compressed header; and the data packet added with the PDCP header is transmitted to the lower layer. In the architecture where the PDAP layer is added according to the embodiments of the present disclosure, the header compression is implemented through the PDAP layer or the PDCP layer. Therefore, the new architecture where the PDAP layer is added can support the header compression function, signaling overhead can be decreased, and relatively effective data transmission is achieved.

Further, in the foregoing step 101, the compressing, for the data packet with the header, the header by the PDCP layer to obtain the data packet with the compressed header includes: compressing the header by a compression entity configured by the PDCP layer to obtain the data packet with the compressed header.

Specifically, the compression entity is a header compression RoHC entity, and the network side may configure one header compression RoHC entity of the PDAP layer of a terminal to correspond to one PDCP entity, or to correspond to one data radio bearer DRB entity, or to correspond to a data stream, or to correspond to a cell group, or to correspond to a user equipment.

Specifically, as shown in Fig. 2, Fig. 2 is a schematic diagram of operations of a PDCP layer and a PDAP layer according to an embodiment of the present disclosure. The RoHC entity is introduced at the PDAP layer, and the RoHC entity at the PDCP layer is deleted.

The transmitting end operates as following.

A PDAP layer configured with a header compression RoHC entity receives a data packet from a higher layer (such as the TCP/IP layer in the figures), and transmits the data packet to the RoHC entity for header compression. The RoHC entity compresses the header of the data packet from the higher layer to generate a new compression header.

The PDAP layer adds the PDAP header into data (including the compressed header and data) which has been compressed by the RoHC entity, i.e., to generate a PDAP protocol data unit (PDAP PDU), and transmits the PDAP PDU to the PDCP layer.

The PDCP layer does not perform RoHC processing on the PDAP PDU, the PDCP layer adds the PDCP header to the PDAP PDU and transmits the PDAP PDU that is obtained by adding the PDCP header to a lower layer.

Correspondingly, the receiving end operates as following.

The PDCP layer does not perform RoHC processing on the PDAP PDU, and the PDCP layer removes the PDCP header from the PDAP PDU and transmits it to the PDAP layer.

The PDAP layer removes the PDAP header, and transmits, after removing the PDAP header, the data (including the compressed header and data) which has been compressed by the RoHC entity to the RoHC entity for decompression.

The PDAP layer transmits the data packet which has been decompressed by the RoHC entity to a higher layer (such as the TCP/IP layer).

In the method for data transmission according to the embodiment of the present disclosure, an architecture where the PDAP layer is added can support the header compression function by configuring a compression entity at the PDAP layer.

Further, in the above step 101, the compressing, for the data packet with the header, the header by the PDCP layer to obtain the data packet with the compressed header includes steps 1011 and 1012.

Step 1011: adding a PDAP header into the data packet with the header to obtain a data packet with the PDAP header.

Specifically, the PDAP header is located at a head of the data packet. In other embodiments not in accordance with the claims, the PDAP header may be located between the header and the data of the data packet, or at an end of the data packet.

In a case that the PDAP header is located at the end of the data packet, the above step 1011 may specifically include: encoding, after adding the PDAP header into the end of the data packet with the header, a data packet that is added with the PDAP header according to a predetermined encoding manner to obtain the data packet with the PDAP header. The predetermined encoding manner specifically includes encoding the data packet starting from a last bit of the data packet.

In a case that the PDAP header is located between the header and the data of the data packet, the foregoing step 1011 may specifically include: adding the PDAP header between the header of the data packet with the header and data of the data packet with the header to obtain the data packet with the PDAP header.

In a case that the PDAP header is located at the head of the data packet, the foregoing step 1011 may specifically include: adding the PDAP header into a head of the data packet with the header; and adding indication information for indicating a length of the PDAP header into a data packet that is added with the PDAP header, to obtain the data packet with the PDAP header.

The indication information may also be used to indicate a length of the data packet that is added with the PDAP header (a length of the PDAP PDU), and may also be used to indicate a length of the data portion in the data packet that is added with the PDAP header.

Step 1012: performing a header compression on the data packet with the PDAP header by a compression entity configured by the PDCP layer to obtain the data packet with the compressed header.

In a case that the PDAP header is located at the head of the data packet, the step 1012 may specifically include:
performing PDAP header removal processing on the data packet with the PDAP header according to the indication information; and
compressing, by the compression entity configured by the PDCP layer, a data packet subjected to the PDAP header removal processing to obtain the data packet with the compressed header.

In this case, the foregoing step 102 specifically includes: adding the PDAP header and the PDCP header into the data packet with the compressed header; adding indication information for indicating a length of the PDAP header into the PDCP header; and transmitting a data packet that has been added with the PDAP header, the PDCP header and the indication information to the lower layer.

In the method for data transmission according to the embodiment of the present disclosure, after the PDCP layer adds the PDAP header into the packet with the header, the PDCP layer compresses the header of the data packet to which the PDAP header is added. In such manner, an architecture where the PDAP layer is added can support the header compression function.

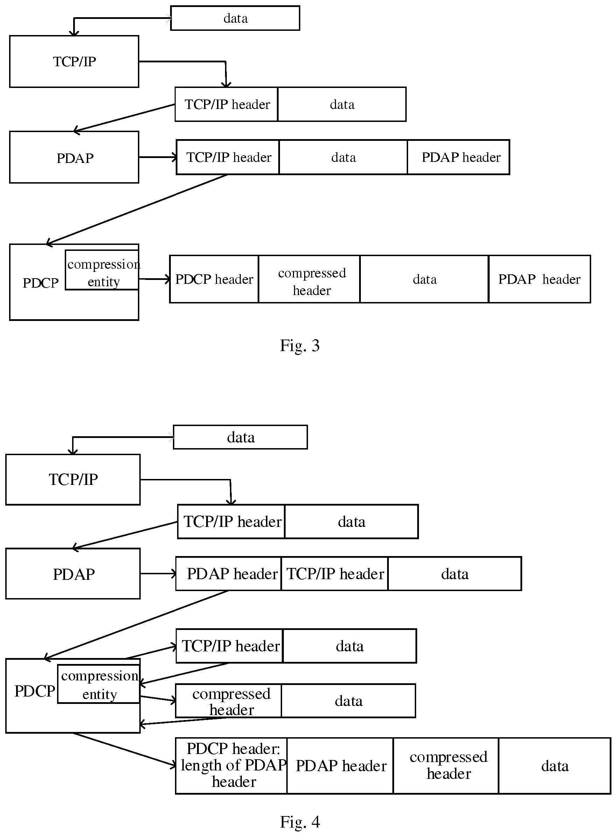

Implementation manners of compressing the header of the data packet by the compression entity configured by the PDCP layer in some embodiments of the present disclosure is specifically described below with reference to Fig. 3, Fig. 4 and Fig. 5.

A first implementation manner includes adding a PDAP header into an end of a data packet with a header.

The transmitting end operates as following.

As shown in Fig. 3, which is not in accordance with the appended claims and given as examples useful for the understanding of the invention, after receiving a data packet from a higher layer (such as the TCP/IP layer), a PDAP layer adds a PDAP header into the end of the data packet to obtain a PDAP PDU and then transmits the PDAP PDU to a PDCP layer. An encoding manner of the PDAP layer is encoding starting from a last bit (for example, the first indication bit of the PDAP is the last bit of the PDAP PDU).

The PDCP layer performs RoHC header compression processing on the PDAP PDU, adds the PDCP header, and transmits the PDAP PDU the lower layer.

The receiving end operates as following.

The PDCP layer removes the PDCP header, and transmits the PDCP packet to a RoHC entity for header decompression. The decompressed data packet is transmitted to the PDAP layer.

The PDAP layer reads from the last bit of the decompressed data packet to obtain the PDAP header information, removes the PDAP header according to the PDAP header information, and transmits the data packet after removing the PDAP header to a higher layer (such as the TCP/IP layer).

A second implementation manner includes: adding a PDAP header into a head of a data packet with a header.

The transmitting end operates as following.

As shown in Fig. 4, after receiving a data packet from a higher layer (such as the TCP/IP layer in the figures), a PDAP layer adds a PDAP header into the head of the data packet and then transmits PDAP PDU obtained by adding the PDAP header to a PDCP layer. At the same time, the PDAP layer needs to inform the PDCP layer of packet length information of the PDAP PDU, and the packet length information includes: a length of the PDAP header, and may also include at least one of a length of the PDAP PDU or a length of data portion of the PDAP data packet.

The PDCP layer removes the PDAP header according to the length information indicated by the PDAP layer, and then transmits the data portion to the RoHC entity for header compression. After the RoHC compression is completed, the PDCP adds the PDAP header and the PDCP header again. Length information of the PDAP header may be indicated in the PDCP header by the PDCP layer, and a length of the PDAP PDU and/or a length of the data portion of the PDAP may also be indicated.

The receiving end operates as following.

The PDCP layer removes the PDCP header, removes the PDAP header according to the length information of the PDAP header indicated in the PDCP header to obtain a PDCP packet, and transmits the PDCP packet to the RoHC entity for header decompression. The data packet subjected to the header decompression is added with the PDAP header and transmitted to the PDAP layer.

The PDAP layer removes the PDAP header and transmits the data packet obtained after removing the PDAP header to the higher layer (such as the TCP/IP layer).

A third implementation manner includes: adding a PDAP header between a header and data of a data packet.

The transmitting end operates as following.

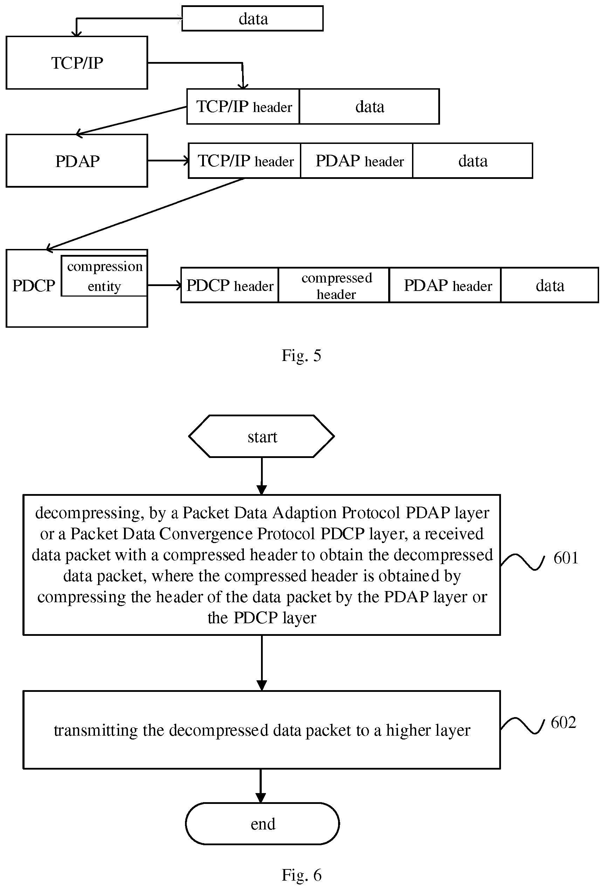

As shown in Fig. 5, which is not in accordance with the appended claims and given as examples useful for the understanding of the invention, after receiving the data packet from a higher layer (such as the TCP/IP layer in the figures), a PDAP layer inserts the PDAP header between the header and the data of the data packet, packages the data packet with the PDAP header to be a PDAP PDU, and then transmits the PDAP PDU to a PDCP layer.

The PDCP layer performs RoHC header compression processing on the PDAP PDU, adds a PDCP header into the PDAP PDU, and transmits the data packet that has been added with the PDCP header to a lower layer.

The receiving end operates as following.

The PDCP layer removes the PDCP header from the data packet and transmits the data packet after the removal of the PDCP header to a RoHC entity for header decompression. The decompressed data packet is transmitted to the PDAP layer.

The PDAP layer reads header information of the PDAP layer between the header (such as a TCP/IP header) and the data, removes the PDAP header according to the read header information of the PDAP layer, and finally re-packages the header and the data of the data packet and transmits the re-packaged data packet to a higher layer (such as a TCP/IP layer).

According to the method for data transmission of the embodiments of the present disclosure, for the data packet with the header, the header is compressed by the PDAP layer or the PDCP layer to obtain the data packet with the compressed header; the PDCP header is added into the data packet with the compressed header; and the data packet added with the PDCP header is transmitted to the lower layer. In the architecture where the PDAP layer is added according to the embodiments of the present disclosure, the header compression is implemented through the PDAP layer or the PDCP layer, so that the new architecture where the PDAP layer is added can support the header compression function.

As shown in Fig. 6, another embodiment of the present disclosure further provides a method for data transmission, which is applied to a receiving end, and includes steps 601 and 602.

Step 601: decompressing, by a Packet Data Adaption Protocol PDAP layer or a Packet Data Convergence Protocol PDCP layer, a received data packet with a compressed header to obtain the decompressed data packet, where the compressed header is obtained by compressing the header of the data packet by the PDAP layer or the PDCP layer.

The data packet with the compressed header is specifically data from a lower layer, that is, the data packet transmitted by a protocol layer below the PDCP layer. The compressed header is obtained by compressing the header of the data packet by a PDAP compression entity or a PDCP compression entity. For example, the compression header is obtained by compressing a header of a TCP/IP data packet by the PDAP compression entity or the PDCP compression entity.

Step 602: transmitting the decompressed data packet to a higher layer.

The higher layer refers to a protocol layer located above the PDAP layer, such as a TCP/IP layer.

In the method for data transmission according to the embodiment of the present disclosure, the received data packet with the compressed header is decompressed through the PDAP layer or the PDCP layer to obtain the decompressed data packet, and the decompressed data packet is transmitted to a higher layer. Therefore, the new architecture where the PDAP layer is added can support the header compression function, and more effective data transmission is achieved.

Optionally, in the foregoing step 601, the decompressing, by the PDCP layer, the received data packet with the compressed header to obtain the decompressed data packet includes: removing a PDCP header and a PDAP header from the data packet with the compressed header; and decompressing, by a compression entity configured by the PDCP layer, a data packet from which the PDCP header and the PDAP header have been removed, to obtain the decompressed data packet.

The compression entity configured by the PDAP layer corresponds to one PDCP entity, or corresponds to one data radio bearer DRB entity, or corresponds to one data stream, or corresponds to one cell group, or corresponds to one user equipment.

Specifically, as shown in Fig. 2, a RoHC entity is introduced at the PDAP layer, and the RoHC entity at the PDCP layer is deleted.

The transmitting end operates as following.

The PDAP layer configured with a header compression RoHC entity receives a data packet from a higher layer (such as the TCP/IP layer in the figures), and transmits the data packet to the RoHC entity for header compression. The RoHC entity compresses the header of the data packet from the higher layer to generate a new compression header.

The PDAP layer adds the PDAP header into data (including the compressed header and data) which has been compressed by the RoHC entity, i.e., to generate a PDAP protocol data unit (PDAP PDU), and transmits the PDAP PDU to the PDCP layer.

The PDCP layer does not perform RoHC processing on the PDAP PDU, adds the PDCP header to the PDAP PDU, and transmits the PDAP PDU to a lower layer.

Correspondingly, the receiving end operates as following.

The PDCP layer does not perform RoHC processing on the PDAP PDU, removes the PDCP header from the PDAP PDU and transmits it to the PDAP layer.

The PDAP layer removes the PDAP header, and transmits, after removing the PDAP header, the data (including the compressed header and data) which has been compressed by the RoHC entity to the RoHC entity for decompression.

The PDAP layer transmits the data packet which has been decompressed by the RoHC entity to a higher layer (such as the TCP/IP layer).

In the method for data transmission according to the embodiment of the present disclosure, an architecture where the PDAP layer is added can support the header compression function by configuring a compression entity at the PDAP layer.

Further, in the above step 601, the decompressing, by the PDCP layer, the received data packet with the compressed header to obtain the decompressed data packet includes steps 6011 to 6013.

Step 6011: performing PDCP header removal processing on the data packet with the compressed header.

Step 6012: decompressing, by a compression entity configured by the PDCP layer, a data packet subjected to the PDCP header removal processing to obtain a to-be-processed data packet.

In a case that the PDAP header is located at a head of the data packet, the PDAP header in the to-be-processed data packet is removed according to indication information in the PDCP header for indicating a length of the PDAP header. A data packet obtained after removing the PDAP header is decompressed by the compression entity configured by the PDCP layer, and the PDAP header is added into the decompressed data packet to obtain the to-be-processed data packet.

Step 6013: performing PDAP header removal processing on the to-be-processed data packet to obtain the decompressed data packet.

Specifically, in other embodiments not in accordance with the claims, the PDAP header located at the end of the to-be-processed data packet is removed according to a predetermined decoding manner to obtain the decompressed data packet, where the predetermined decoding manner is to start decoding from the last bit of the data packet; or the PDAP header located between the end of the to-be-processed data packet and data of the to-be-processed data packet to obtain the decompressed data packet.

The procedures for processing the data packet at the receiving end are described in detail in the above embodiments corresponding to the transmitting end, which are not described herein again.

In the method for data transmission according to the embodiment of the present disclosure, the received data packet with the compressed header is decompressed by the PDAP layer or the PDCP layer to obtain the decompressed data packet, and the decompressed data packet is transmitted to the higher layer. Therefore, the new architecture where the PDAP layer is added can support the header compression function, and more effective data transmission is achieved.

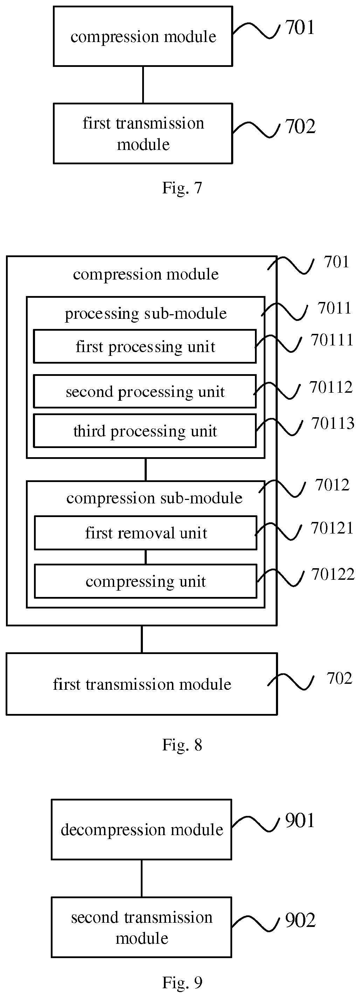

As shown in Fig. 7, an embodiment of the present disclosure further provides a terminal, including:
a compression module 701, configured to compress, for a data packet with a header, the header through a Packet Data Adaption Protocol PDAP layer or a Packet Data Convergence Protocol PDCP layer to obtain a data packet with the compressed header; and
a first transmission module 702, configured to add a PDCP header into the data packet with the compressed header and transmit a data packet with the compressed header and the PDCP header to a lower layer.

In the terminal of the embodiment of the present disclosure, the compression module 701 is configured to compress the header through a compression entity configured by the PDAP layer, and add a PDAP header to the compressed data packet to obtain the data packet with the compressed header.

In the terminal of the embodiment of the present disclosure, the compression entity configured by the PDAP layer corresponds to one PDCP entity, or corresponds to one data radio bearer DRB entity, or corresponds to one data stream, or corresponds to one cell group, or corresponds to one user equipment.

Fig. 8 is a block structural diagram of a terminal according to another embodiment of the present disclosure. As shown in Fig. 8, the compression module 701 includes:
a processing sub-module 7011, configured to add a PDAP header into the data packet with the header to obtain a data packet with the PDAP header; and
a compression sub-module 7012, configured to perform a header compression on the data packet with the PDAP header through a compression entity configured by the PDCP layer to obtain the data packet with the compressed header.

In the terminal according to an illustrative embodiment of the present disclosure not in accordance with the appended claims, the processing sub-module 7011 includes: a first processing unit 70111, which is configured to: add the PDAP header into an end of the data packet with the header; and encode a data packet that is added with the PDAP header according to a predetermined encoding manner to obtain the data packet with the PDAP header.

In the terminal according to an illustrative embodiment of the present disclosure not in accordance with the appended claims, the processing sub-module 7011 includes: a second processing unit 70112, which is configured to add the PDAP header between the header of the data packet with the header and data of the data packet with the header to obtain the data packet with the PDAP header.

In the terminal according to an embodiment of the present disclosure, the processing sub-module 7011 includes: a third processing unit 70113, configured to add the PDAP header into a head of the data packet with the header; and add indication information for indicating a length of the PDAP header into a data packet that is added with the PDAP header, to obtain the data packet with the PDAP header.

In the terminal according to an embodiment of the present disclosure, the compression sub-module 7012 includes: a first removal unit 70121, configured to perform PDAP header removal processing on the data packet with the PDAP header according to the indication information; and a compressing unit 70122, configured to perform a data packet subjected to the PDAP header removal processing by the compression entity configured by the PDCP layer to obtain the data packet with the compressed header.

In the terminal according to an embodiment of the present disclosure, the first transmission module 702 is configured to add the PDAP header and the PDCP header into the data packet with the compressed header; add indication information for indicating a length of the PDAP header into the PDCP header; and transmit a data packet that is added with the PDAP header, the PDCP header and the indication information to the lower layer.

In the terminal according to an illustrative embodiment of the present disclosure not in accordance with the appended claims, the predetermined encoding manner includes encoding the data packet starting from a last bit of the data packet.

It should be noted that the embodiments of the present disclosure involves a terminal corresponding to the foregoing method for data transmission applied to the transmitting end. All the implementation manners in the foregoing method embodiments are applicable to the terminal embodiments, and the same effects can be achieved.

The terminal according to the embodiments of the present disclosure compresses, for the data packet with the header, the header through the PDAP layer or the PDCP layer to obtain the data packet with the compressed header, adds he PDCP header into the data packet with the compressed header, and transmits the data packet added with the PDCP header to the lower layer. In the architecture where the PDAP layer is added according to embodiments of the present disclosure, the header compression is implemented through the PDAP layer or the PDCP layer, so that the new architecture where the PDAP layer is added can support the header compression function.

As shown in Fig. 9, another embodiment of the present disclosure further provides a terminal, including:
a decompression module 901, configured to decompress a received data packet with a compressed header by a Packet Data Adaption Protocol PDAP layer or a Packet Data Convergence Protocol PDCP layer to obtain the decompressed data packet, where the compressed header is obtained by compressing the header of the data packet by the PDAP layer or the PDCP layer; and
a second transmission module 902, configured to transmit the decompressed data packet to a higher layer.

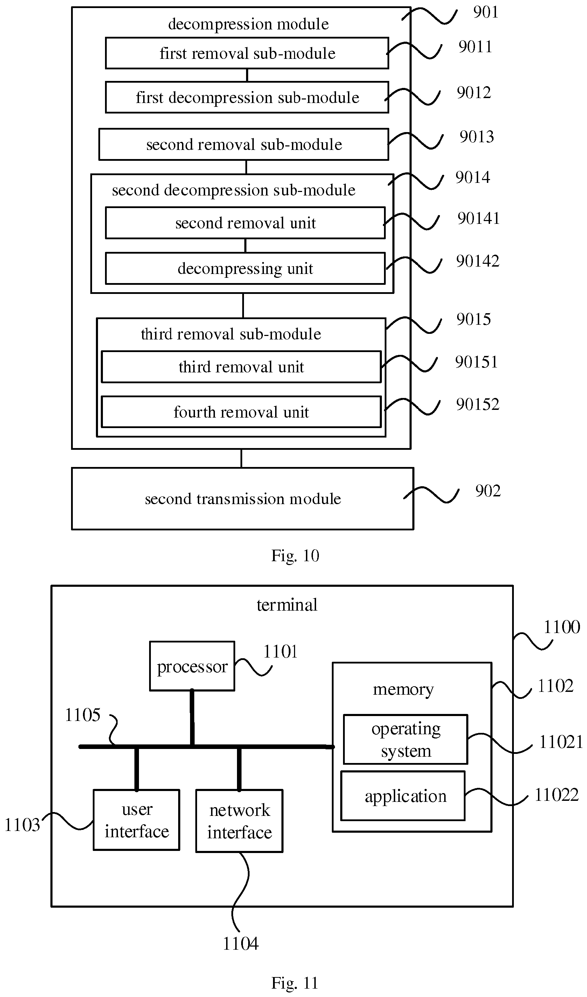

Fig. 10 is a block structural diagram of a terminal according to another embodiment of the present disclosure. As shown in Fig. 10, the decompression module 901 includes:
a first removal sub-module 9011, configured to perform PDCP header removal processing and PDAP header removal processing on the data packet with the compressed header; and
a first decompression sub-module 9012, configured to decompress a data packet subjected to the PDCP header removal processing and PDAP header removal processing through a compression entity configured by the PDAP layer to obtain the decompressed data packet.

In the terminal according to an embodiment of the present disclosure, the compression entity configured by the PDAP layer corresponds to one PDCP entity, or corresponds to one data radio bearer DRB entity, or corresponds to one data stream, or corresponds to one cell group, or corresponds to one user equipment.

In the terminal according to an embodiment of the present disclosure, the decompression module 901 includes:
a second removal sub-module 9013, configured to perform PDCP header removal processing on the data packet with the compressed header;
a second decompression sub-module 9014, configured to decompress, by a compression entity configured by the PDCP layer, a data packet subjected to the PDCP header removal processing to obtain a to-be-processed data packet; and
a third removal sub-module 9015, configured to perform PDAP header removal processing on the to-be-processed data packet to obtain the decompressed data packet.

In the terminal according to an embodiment of the present disclosure, the second decompression sub-module 9014 includes:
a second removal unit 90141, configured to remove a PDAP header from the to-be-processed data packet according to indication information in the PDCP header for indicating a length of the PDAP header; and
a decompressing unit 90142, configured to decompress, by the compression entity configured by the PDCP layer, a data packet obtained after removing the PDAP header, and add the PDAP header into the decompressed data packet to obtain the to-be-processed data packet.

In the terminal according to an illustrative embodiment of the present disclosure not in accordance with the appended claims, the third removal sub-module 9015 includes:
a third removal unit 90151, configured to remove the PDAP header at an end of the to-be-processed data packet according to a predetermined decoding manner to obtain the decompressed data packet.

In the terminal according to an illustrative embodiment of the present disclosure not in accordance with the appended claims, the third removal sub-module 9015 includes:
a fourth removal unit 90152, configured to remove the PDAP header between an end of the to-be-processed data packet and data of the to-be-processed data packet to obtain the decompressed data packet.

In the terminal according to an illustrative embodiment of the present disclosure not in accordance with the appended claims, the predetermined decoding manner includes decoding the data packet starting from a last bit of the data packet.

It should be noted that the terminal in the embodiments of the present disclosure corresponds to the method for data transmission applied to the transmitting end, and all the implementation manners in the foregoing method embodiments are applicable to the terminal embodiments, and the same effects can be achieved.

The terminal according to the embodiments of the present disclosure decompresses the received data packet with the compressed header through the PDAP layer or the PDCP layer to obtain the decompressed data packet, and transmits the decompressed data packet to a higher layer. Therefore, the new architecture where the PDAP layer is added can support the header compression function, and more effective data transmission is achieved.

As shown in Fig. 11, another embodiment of the present disclosure not in accordance with the appended claims and given as examples useful for the understanding of the invention further provides a terminal. The terminal 1100 shown in Fig. 11 includes: at least one processor 1101, a memory 1102, at least one network interface 1104, and other user interfaces 1103. The various components in terminal 1100 are coupled together by a bus system 1105. It should be appreciated that the bus system 1105 is used to implement connections and communications among these components. The bus system 1105 includes a power bus, a control bus, and a status signal bus in addition to the data bus. For clarification considerations, the various buses are denoted by the bus system 1105 in Fig. 11.

The user interface 1103 may include a display, a keyboard, or a click device (for example, a mouse, a trackball, a touchpad, or a touch screen).

It is understandable that the memory 1102 in the embodiment of the present disclosure may be a volatile memory or a non-volatile memory, or may include both volatile and non-volatile memories. The non-volatile memory may be a read-only memory (Read-Only Memory, ROM), a programmable read-only memory (Programmable ROM, PROM), an erasable programmable read-only memory (Erasable PROM, EPROM), or an electrically erasable programmable read-only memory (Electrically EPROM, EEPROM) or a flash memory. The volatile memory may be a random access memory (Random Access Memory, RAM) that acts as a highspeed external cache. By way of example and not limitation, many kinds of RAM are viable, such as static random access memory (Static RAM, SRAM), dynamic random access memory (Dynamic RAM, DRAM), synchronous dynamic random access memory (Synchronous DRAM, SDRAM), double data rate synchronous dynamic random access memory (Double Data Rate SDRAM, DDRSDRAM), enhanced synchronous dynamic random access memory (Enhanced SDRAM, ESDRAM), synchlink connection dynamic random access memory (Synchlink DRAM, SDRAM) and direct memory bus random access memory (Direct Rambus RAM, DRRAM). The memory 1102 in the systems and methods described in the specification is intended to include, but not limited to, these and any other suitable types of memory.

In some implementations, the memory 1102 stores elements, such as executable modules, data structures, or a subset thereof, or an extended set thereof, for example, an operating system 11021 and an application 11022.

The operating system 11021 includes various system programs, such as a framework layer, a core library layer, a driver layer, and the like, for implementing various basic services and processing hardware-based tasks. The application 11022 includes various applications, such as a media player (Media Player), a browser (Browser), and the like, for implementing various application services. A program implementing the method of the embodiments of the present disclosure may be included in the application 11022.

In an embodiment of the present disclosure, by invoking a program or instructions stored in the memory 1102, specifically, a program or instructions stored in the application 11022, the processor 1101 is configured to: compress, for a data packet with a header, the header through a Packet Data Adaption Protocol PDAP layer or a Packet Data Convergence Protocol PDCP layer to obtain a data packet with the compressed header; and adding a PDCP header into the data packet with the compressed header and transmitting a data packet with the compressed header and the PDCP header to a lower layer.

Optionally, the processor 1101 is further configured to: compress the header by a compression entity configured by the PDAP layer, and add a PDAP header to the compressed data packet to obtain a data packet with the compressed header.

Optionally, the compression entity configured by the PDAP layer corresponds to one PDCP entity, or corresponds to one data radio bearer DRB entity, or corresponds to one data stream, or corresponds to one cell group, or corresponds to one user equipment.

Optionally, the processor 1101 is further configured to: add a PDAP header into the data packet with the header to obtain a data packet with the PDAP header; and perform a header compression on the data packet with the PDAP header through a compression entity configured by the PDCP layer to obtain the data packet with the compressed header.

Optionally, the processor 1101 is further configured to: add the PDAP header into an end of the data packet with the header; and encode a data packet that is added with the PDAP header according to a predetermined encoding manner to obtain the data packet with the PDAP header.

Optionally, the processor 1101 is further configured to: add the PDAP header between the header of the data packet with the header and data of the data packet with the header to obtain the data packet with the PDAP header.

Optionally, the user interface 1103 is further configured to: add the PDAP header into a head of the data packet with the header; and add indication information for indicating a length of the PDAP header into a data packet that is added with the PDAP header, to obtain the data packet with the PDAP header.

Optionally, the processor 1101 is further configured to perform PDAP header removal processing on the data packet with the PDAP header according to the indication information; and perform a data packet subjected to the PDAP header removal processing by the compression entity configured by the PDCP layer to obtain the data packet with the compressed header.

Optionally, the processor 1101 is further configured to: add the PDAP header and the PDCP header into the data packet with the compressed header; add indication information for indicating a length of the PDAP header into the PDCP header; and transmit a data packet that is added with the PDAP header, the PDCP header and the indication information to the lower layer.

Optionally, the predetermined encoding manner includes encoding the data packet starting from a last bit of the data packet.

In the terminal 1100 according to the embodiments of the present disclosure, the processor 1101 is configured to compress, for the data packet with the header, the header through the PDAP layer or the PDCP layer to obtain the data packet with the compressed header, add he PDCP header into the data packet with the compressed header, and transmit the data packet added with the PDCP header to the lower layer. In the architecture where the PDAP layer is added according to embodiments of the present disclosure, the header compression is implemented through the PDAP layer or the PDCP layer, so that the new architecture where the PDAP layer is added can support the header compression function, and more efficient data transmission is achieved.

In still another embodiment of the present disclosure, by invoking a program or instructions stored in the memory 1102, specifically a program or instructions stored in the application 11022, the processor 1101 is configured to decompress a received data packet with a compressed header by a Packet Data Adaption Protocol PDAP layer or a Packet Data Convergence Protocol PDCP layer to obtain the decompressed data packet, where the compressed header is obtained by compressing the header of the data packet by the PDAP layer or the PDCP layer; and transmit the decompressed data packet to a higher layer.

Optionally, the processor 1101 is further configured to: perform PDCP header removal processing and PDAP header removal processing on the data packet with the compressed header; and decompress a data packet subjected to the PDCP header removal processing and PDAP header removal processing through a compression entity configured by the PDAP layer to obtain the decompressed data packet.

Optionally, the compression entity configured by the PDAP layer corresponds to one PDCP entity, or corresponds to one data radio bearer DRB entity, or corresponds to one data stream, or corresponds to one cell group, or corresponds to one user equipment.

Optionally, the processor 1101 is further configured to: perform PDCP header removal processing on the data packet with the compressed header; decompress, by a compression entity configured by the PDCP layer, a data packet subjected to the PDCP header removal processing to obtain a to-be-processed data packet; and perform PDAP header removal processing on the to-be-processed data packet to obtain the decompressed data packet.

Optionally, the processor 1101 is further configured to: remove a PDAP header from the to-be-processed data packet according to indication information in the PDCP header for indicating a length of the PDAP header; and decompress, by the compression entity configured by the PDCP layer, a data packet obtained after removing the PDAP header, and add the PDAP header into the decompressed data packet to obtain the to-be-processed data packet.

Optionally, the processor 1101 is further configured to: remove the PDAP header at an end of the to-be-processed data packet according to a predetermined decoding manner to obtain the decompressed data packet.

Optionally, the processor 1101 is further configured to: remove the PDAP header between an end of the to-be-processed data packet and data of the to-be-processed data packet to obtain the decompressed data packet.

Optionally, the predetermined decoding manner includes decoding the data packet starting from a last bit of the data packet.

For the terminal 1100 according to the embodiments of the present disclosure, the processor 1101 is configured to decompress the received data packet with the compressed header through the PDAP layer or the PDCP layer to obtain the decompressed data packet, and transmit the decompressed data packet to a higher layer. Therefore, the new architecture where the PDAP layer is added can support the header compression function, and more effective data transmission is achieved.

The terminal of the present disclosure may be a cellphone, a tablet computer, a personal digital assistant (Personal Digital Assistant, PDA) or an on-board computer.

The terminal 1100 can implement various processes implemented by the terminal in the foregoing embodiments, which is not described herein to avoid repetition.

All the methods disclosed in the above embodiments of the present disclosure can be applied in the processor 1101 or implemented by the processor 1101. The processor 1101 may be an integrated circuit chip with signal processing capabilities. In the implementation process, each step of the foregoing methods may be completed by an integrated logic circuit in form of hardware in the processor 1101 or instructions in a form of software. The processor 1101 may be a general-purpose processor, a digital signal processor (Digital Signal Processor, DSP), an application specific integrated circuit (Application Specific Integrated Circuit, ASIC), a field programmable gate array (Field Programmable Gate Array, FPGA) or any other programmable logic device, discrete gate, transistor logic device or discrete hardware component, which can implement or carry out the methods, steps, and logical block diagrams according to the embodiments of the present disclosure. The general-purpose processor may be a microprocessor, or the processor may be any conventional processor or the like. The steps of the methods according to the embodiments of the present disclosure may be directly implemented by a hardware decoding processor, or may be performed by a combination of hardware and software modules in the decoding processor. The software module can be located in a conventional storage medium such as a random access memory, a flash memory, a read-only memory, a programmable read-only memory, an electrically erasable programmable memory, a registers, or the like. The storage medium is located in the memory 1102, and the processor 1101 reads the information in the memory 1102 and performs the steps of the above methods in combination with its hardware.

It may be appreciated that the embodiments described herein can be implemented in hardware, software, firmware, middleware, microcode, or a combination thereof. For hardware implementation, the processing unit can be implemented in one or more of an application specific integrated circuit (Application Specific Integrated Circuits, ASIC), a digital signal processor (Digital Signal Processing, DSP), a digital signal processing device (DSP Device, DSPD), a programmable logic device (Programmable Logic Device, PLD), a field-programmable gate array (Field-Programmable Gate Array, FPGA), a general-purpose processor, a controller, a microcontroller, a microprocessor, other electronic units for performing the functions according to the present disclosure, or a combination of the above.

For software implementation, the technical solutions according to the present disclosure may be implemented by modules (e.g., processes, functions, and so on) for performing the functions according to the present disclosure. The software code may be stored in the memory and executed by the processor, and the memory may be implemented inside or outside the processor.

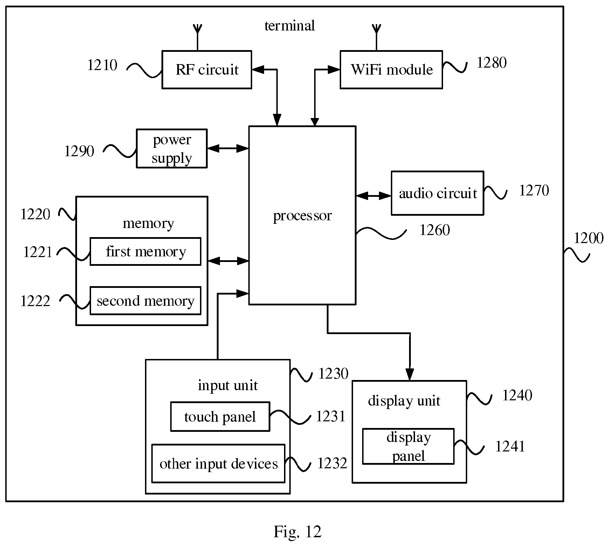

As shown in Fig. 12, another embodiment of the present disclosure not in accordance with the appended claims and given as examples useful for the understanding of the invention further provides a terminal. The terminal 1200 includes: a radio frequency (RF) circuit 1210, a memory 1220, an input unit 1230, a display unit 1240, a processor 1260, an audio circuit 1270, a WiFi (Wireless Fidelity) module 1280, and a power supply 1290.

The input unit 1230 may be configured to receive numeric or character information inputted by the user, and to generate signal inputs related to user settings and function control of the terminal 1200. Specifically, in the embodiment of the present disclosure, the input unit 1230 may include a touch panel 1231. The touch panel 1231, also referred to as a touch screen, may collect touch operations on or near the user (such as an operation performed by the user using any suitable object or accessory such as a finger or a stylus on the touch panel 1231), and drive a corresponding connection apparatus according to a preset program. Optionally, the touch panel 1231 may include two parts: a touch detection apparatus and a touch controller. The touch detection apparatus is configured to detect a touch position of the user, detect a signal generated due to the touch operation, and transmit the signal to the touch controller; and the touch controller is configured to receive the touch information from the touch detection device, convert the touch information into contact coordinates, send the contact coordinates to the processor 1260, and receive and execute commands from the processor 1260. In addition, the touch panel 1231 can be implemented in various types such as resistive, capacitive, infrared, and surface acoustic waves. In addition to the touch panel 1231, the input unit 1230 may further include other input devices 1232. The other input devices 1232 may include, but are not limited to, one or more of a physical keyboard, a function button (such as a volume control button and a switch button), a trackball, a mouse, or a joystick.

The display unit 1240 may be used to display information inputted by the user or information provided to the user and various menu interfaces of the terminal 1200. The display unit 1240 may include a display panel 1241. Optionally, the display panel 1241 may be configured in the form of a liquid crystal display (LCD) panel or an organic light-emitting diode (Organic Light-Emitting Diode, OLED).

It should be noted that the touch panel 1231 may cover the display panel 1241 to form a touch display screen, and when the touch display screen detects a touch operation on or near it, the touch display screen transmits the detected touch operation to the processor 1260 to determine the type of the touch event, and then the processor 1260 provides a corresponding visual output on the touch display based on the type of touch event.

The touch display screen includes an application interface display region and a commonly-used control display region. An arrangement mode of the application interface display region and the common control display region is not limited, which may be up-and-down arrangement or left-and-right arrangement, as long as the two display regions can be distinguished from each other. The application interface display region may be used to display interfaces of applications. Each interface may include interface elements such as at least one application icon and/or widget desktop control. The application interface display region may also be an empty interface that does not contain any content. The commonly-used control display region is used to display controls which are used frequently, for example, a setting button, an interface number, a scroll bar, and application icons such as a phone book icon.

The processor 1260 is a control center of the terminal 1200, connected to various parts of the entire cellphone through various interfaces and wirings, performs functions of the terminal 1200 and process data by running or executing software programs and/or modules stored in a first memory 1221 and invoking data stored in a second memory 1222, thereby performing overall monitoring on the terminal 1200. Optionally, the processor 1260 may include one or more processing units.

In an embodiment of the present disclosure, by invoking the software program and/or module stored in the first memory 1221 and/or data stored in the second memory 1222, the processor 1260 is configured to: compress, for a data packet with a header, the header through a Packet Data Adaption Protocol PDAP layer or a Packet Data Convergence Protocol PDCP layer to obtain a data packet with the compressed header; and adding a PDCP header into the data packet with the compressed header and transmitting a data packet with the compressed header and the PDCP header to a lower layer.

Optionally, the processor 1260 is further configured to: compress the header by using a compression entity configured by the PDAP layer, and add a PDAP header to the compressed data packet to obtain a data packet with the compressed header.

Optionally, the compression entity configured by the PDAP layer corresponds to one PDCP entity, or corresponds to one data radio bearer DRB entity, or corresponds to one data stream, or corresponds to one cell group, or corresponds to one user equipment.

Optionally, the processor 1260 is further configured to: add a PDAP header into the data packet with the header to obtain a data packet with the PDAP header; and perform a header compression on the data packet with the PDAP header through a compression entity configured by the PDCP layer to obtain the data packet with the compressed header.

Optionally, the processor 1260 is further configured to: add the PDAP header into an end of the data packet with the header; and encode a data packet that is added with the PDAP header according to a predetermined encoding manner to obtain the data packet with the PDAP header.

Optionally, the processor 1260 is further configured to: add the PDAP header between the header of the data packet with the header and data of the data packet with the header to obtain the data packet with the PDAP header.

Optionally, the processor 1260 is further configured to: add the PDAP header into a head of the data packet with the header; and add indication information for indicating a length of the PDAP header into a data packet that is added with the PDAP header, to obtain the data packet with the PDAP header.

Optionally, the processor 1260 is further configured to perform PDAP header removal processing on the data packet with the PDAP header according to the indication information; and perform a data packet subjected to the PDAP header removal processing by the compression entity configured by the PDCP layer to obtain the data packet with the compressed header.

Optionally, the processor 1260 is further configured to: add the PDAP header and the PDCP header into the data packet with the compressed header; add indication information for indicating a length of the PDAP header into the PDCP header; and transmit a data packet that is added with the PDAP header, the PDCP header and the indication information to the lower layer.

Optionally, the predetermined encoding manner includes encoding the data packet starting from a last bit of the data packet.

For the terminal 1200 according to the embodiments of the present disclosure, the processor 1206 is configured to compress, for the data packet with the header, the header through the PDAP layer or the PDCP layer to obtain the data packet with the compressed header, add he PDCP header into the data packet with the compressed header, and transmit the data packet added with the PDCP header to the lower layer. In the architecture where the PDAP layer is added according to embodiments of the present disclosure, the header compression is implemented through the PDAP layer or the PDCP layer, so that the new architecture where the PDAP layer is added can support the header compression function, and more efficient data transmission is achieved.

In yet another embodiment of the present disclosure, the processor 1260 is configured to decompress a received data packet with a compressed header by a Packet Data Adaption Protocol PDAP layer or a Packet Data Convergence Protocol PDCP layer to obtain the decompressed data packet, where the compressed header is obtained by compressing the header of the data packet by the PDAP layer or the PDCP layer; and transmit the decompressed data packet to a higher layer.

Optionally, the processor 1260 is further configured to: perform PDCP header removal processing and PDAP header removal processing on the data packet with the compressed header; and decompress a data packet subjected to the PDCP header removal processing and PDAP header removal processing through a compression entity configured by the PDAP layer to obtain the decompressed data packet.

Optionally, the compression entity configured by the PDAP layer corresponds to one PDCP entity, or corresponds to one data radio bearer DRB entity, or corresponds to one data stream, or corresponds to one cell group, or corresponds to one user equipment.

Optionally, the processor 1260 is further configured to: perform PDCP header removal processing on the data packet with the compressed header; decompress, by a compression entity configured by the PDCP layer, a data packet subjected to the PDCP header removal processing to obtain a to-be-processed data packet; and perform PDAP header removal processing on the to-be-processed data packet to obtain the decompressed data packet.

Optionally, the processor 1260 is further configured to: remove a PDAP header from the to-be-processed data packet according to indication information in the PDCP header for indicating a length of the PDAP header; and decompress, by the compression entity configured by the PDCP layer, a data packet obtained after removing the PDAP header, and add the PDAP header into the decompressed data packet to obtain the to-be-processed data packet.

Optionally, the processor 1260 is further configured to: remove the PDAP header at an end of the to-be-processed data packet according to a predetermined decoding manner to obtain the decompressed data packet.

Optionally, the processor 1260 is further configured to: remove the PDAP header between an end of the to-be-processed data packet and data of the to-be-processed data packet to obtain the decompressed data packet.

Optionally, the predetermined decoding manner includes decoding the data packet starting from a last bit of the data packet.

For the terminal 1200 according to the embodiments of the present disclosure, the processor 1260 is configured to decompress the received data packet with the compressed header through the PDAP layer or the PDCP layer to obtain the decompressed data packet, and transmit the decompressed data packet to a higher layer. Therefore, the new architecture where the PDAP layer is added can support the header compression function, and more effective data transmission is achieved.

The terminal in the present disclosure may be a cellphone, a tablet computer, a personal digital assistant (Personal Digital Assistant, PDA) or an on-board computer.

The terminal 1200 can implement various processes implemented by the terminal in the foregoing embodiments, which is not described herein to avoid repetition.

Those skilled in the art may appreciate that the units and algorithm steps of the various examples described in conjunction with the embodiments according to the present disclosure can be implemented in the form of electronic hardware or a combination of computer software and electronic hardware. Whether these functions are performed in hardware or software depends on the specific application and design constraints of the solution. Those skilled in the art can use different methods to implement the described functions for each particular application, but such implementations should not be considered as going beyond the scope of the present disclosure.

Those skilled in the art can clearly understand that for convenience and clarification, operation procedures of the systems, devices and units described hereinabove may refer to the corresponding procedures in the method embodiments, and thus will not be particularly defined herein.

It should be understood that in the embodiments according to the present application, the disclosed apparatus and method may be implemented in other manners. For example, the apparatus embodiments described above are merely illustrative. For example, the division of the units is only a logical function division, and in practical implementation, there may be another manner of division. For example, multiple units or components may be combined or integrated into another system, or some features can be ignored or not implemented. In addition, the mutual coupling or direct coupling or communication connection shown or discussed may be implemented with some interfaces, and indirect coupling or communication connection between apparatuses or units may be electrical, mechanical or in other forms.

The units described as separate components may or may not be physically separated, and the components shown as units may or may not be physical units, that is, they may be located in one place or distributed to multiple network units. Some or all of the units may be selected according to practical needs to achieve the objective of the technical solutions of the embodiments.

In addition, functional units in various embodiments of the present disclosure may be integrated into one processing unit, or each unit may exist physically separately, or two or more units may be integrated into one unit.

In a case that the functions are implemented in the form of a software functional unit which is sold or used as a standalone product, the product may be stored in a computer-readable storage medium. Based on such understanding, the essence or the portion of the technical solutions of the present disclosure that contributes to the prior art may be embodied in the form of a software product. The computer software product is stored in a storage medium, which includes instructions that cause a computer device (which may be a personal computer, a server or a network device) to perform all or part of the steps of the methods according to the embodiments of the present disclosure. The foregoing storage medium may include any storage medium that can store program codes, such as a USB flash drive, a mobile hard disk, a ROM, a RAM, a magnetic disk, or an optical disk.

Those skilled in the art may appreciate that all or part of the processes for implementing the above embodiments can be completed by a computer program controlling related hardware, and the program may be stored in a computer-readable storage medium. When the program is executed, the processes in the method embodiments as described above may be performed. The storage medium may be a magnetic disk, an optical disk, a read-only memory (Read-Only Memory, ROM), or a random access memory (Random Access Memory, RAM).

The present disclosure further provides a computer-readable storage medium according to an embodiment, a computer program (instructions) is stored thereon, the program (instructions) is executed by the processor to implement the following steps:
compressing, for a data packet with a header, the header by a Packet Data Adaption Protocol PDAP layer or a Packet Data Convergence Protocol PDCP layer to obtain a data packet with the compressed header, and adding a PDCP header into the data packet with the compressed header and transmitting a data packet with the compressed header and the PDCP header to a lower layer; or
decompressing, by a Packet Data Adaption Protocol PDAP layer or a Packet Data Convergence Protocol PDCP layer, a received data packet with a compressed header to obtain the decompressed data packet, where the compressed header is obtained by compressing the header of the data packet by the PDAP layer or the PDCP layer, and transmitting the decompressed data packet to a higher layer.

Computer readable media includes permanent and non-persistent media, removable and non-removable media, and information may be stored hereon by any method or technology. The information may be computer readable instructions, data structures, modules of programs, or other data. Examples of computer storage media include, but are not limited to, phase change random access memory (PRAM), static random access memory (SRAM), dynamic random access memory (DRAM), other types of random access memory (RAM), read only memory (ROM), electrically erasable programmable read only memory (EEPROM), flash memory or other memory technology, compact disk read only memory (CD-ROM), digital versatile disk (DVD), other optical storage, magnetic tape cartridges, magnetic tape storage or other magnetic storage devices, or any other non-transportable media, which may be used to store information accessible by a computing device. As defined in the specification, computer readable media excludes temporary storage computer readable media (i.e., transitory media), such as modulated data signals and carrier waves.

## Claims

1. A method performed by the transmitting end of a terminal for data transmission, comprising:
compressing (101), for a data packet with a TCP/IP header, the TCP/IP header by a Packet Data Adaptation Protocol PDAP layer or a Packet Data Convergence Protocol PDCP layer to obtain a data packet with the compressed TCP/IP header; and
adding (102) a PDCP header into the data packet with the compressed TCP/IP header and transmitting a data packet with the compressed TCP/IP header and the PDCP header to a lower layer,
**characterized by** that the compressing (101), for the data packet with the TCP/IP header, the TCP/IP header by the PDCP layer to obtain the data packet with the compressed TCP/IP header comprises:
adding, by the PDAP layer, a PDAP header into a head of the data packet with the TCP/IP header, and adding indication information for indicating a length of the PDAP header into a data packet that is added with the PDAP header, to obtain the data packet with the PDAP header; and transmitting the data packet that is added with the PDAP header to the PDCP layer; and
removing, by an entity at the PDCP layer other than a compression entity, the PDAP header from the data packet, and performing, by the compression entity at the PDCP layer, a header compression on the data packet except the PDAP header, or
wherein the compressing (101), for the data packet with the TCP/IP header, the TCP/IP header by the PDAP layer to obtain the data packet with the compressed TCP/IP header comprises:
compressing, by a compression entity configured by the PDAP layer, the TCP/IP header of the data packet, and adding a PDAP header into the compressed data packet, to obtain the data packet with the compressed TCP/IP header.

2. The method for data transmission according to claim 1, wherein the removing, by the entity at the PDCP layer other than the compression entity, the PDAP header from the data packet comprises: performing PDAP header removal processing on the data packet with the PDAP header according to the indication information.

3. The method for data transmission according to claim 1, wherein the adding (102) the PDCP header into the data packet with the compressed TCP/IP header and transmitting the data packet with the compressed TCP/IP header and the PDCP header to the lower layer comprises:
adding the PDAP header and the PDCP header into the data packet with the compressed TCP/IP header; adding indication information for indicating a length of the PDAP header into the PDCP header; and transmitting a data packet that is added with the PDAP header, the PDCP header and the indication information to the lower layer.

4. A method performed by the receiving end of a terminal for data transmission, comprising:
decompressing (601), by a Packet Data Adaptation Protocol PDAP layer or a Packet Data Convergence Protocol PDCP layer, a received data packet with a compressed TCP/IP header to obtain the decompressed data packet, wherein the compressed TCP/IP header is obtained by compressing the TCP/IP header of the data packet by the PDAP layer or the PDCP layer; and
transmitting (602) the decompressed data packet to a higher layer,
**characterized by** that the decompressing (601), by the PDCP layer, the received data packet with the compressed TCP/IP header comprises:
removing, by the PDCP layer, a PDCP header from the data packet with the compressed TCP/IP header;
removing, by an entity at the PDCP layer other than a compression entity configured by the PDCP layer, a PDAP header from the data packet with the compressed TCP/IP header according to indication information in the PDCP header for indicating a length of the PDAP header, and performing, by the compression entity, a header decompression on the data packet except the PDCP header and the PDAP header, or
wherein the decompressing (601), by the PDAP layer, the received data packet with the compressed TCP/IP header comprises:
removing, by the PDAP layer, a PDAP header from the data packet with the compressed TCP/IP header, and performing, by a compression entity configured by the PDAP layer, a header decompression on the data packet with the compressed TCP/IP header that is subjected to the PDAP header removal.

5. A terminal, comprising:
a compression module (701), configured to compress, for a data packet with a TCP/IP header, the TCP/IP header through a Packet Data Adaptation Protocol PDAP layer or a Packet Data Convergence Protocol PDCP layer to obtain a data packet with the compressed TCP/IP header; and
a first transmission module (702), configured to add a PDCP header into the data packet with the compressed TCP/IP header and transmit a data packet with the compressed TCP/IP header and the PDCP header to a lower layer,
**characterized by** that either the compression module (701) comprises:
a first processing sub-module, configured to add, by the PDAP layer, a PDAP header into a head of the data packet with the TCP/IP header, and add indication information for indicating a length of the PDAP header into a data packet that is added with the PDAP header, to obtain the data packet with the PDAP header; and transmit the data packet that is added with the PDAP header to the PDCP layer; and
a first compression sub-module, configured to remove, by an entity at the PDCP layer other than a compression entity, the PDAP header from the data packet, and perform, by the compression entity at the PDCP layer, a header compression on the data packet except the PDAP header, or
otherwise the compression module (701) comprises:
a second compression sub-module, configured to compress, by a compression entity configured by the PDAP layer, the TCP/IP header of the data packet, and add a PDAP header into the compressed data packet, to obtain the data packet with the compressed TCP/IP header.

6. The terminal according to claim 5, wherein the first compression sub-module is further configured to:
perform PDAP header removal processing on the data packet with the PDAP header according to the indication information.

7. The terminal according to claim 5, wherein the first transmission module (702) is further configured to:
add the PDAP header and the PDCP header into the data packet with the compressed TCP/IP header; add indication information for indicating a length of the PDAP header into the PDCP header; and transmit a data packet that is added with the PDAP header, the PDCP header and the indication information to the lower layer.

8. A terminal, comprising:
a decompression module (901), configured to decompress a received data packet with a compressed TCP/IP header through a Packet Data Adaptation Protocol PDAP layer or a Packet Data Convergence Protocol PDCP layer to obtain the decompressed data packet, wherein the compressed TCP/IP header is obtained by compressing TCP/IP header of the data packet by the PDAP layer or the PDCP layer; and
a second transmission module (902), configured to transmit the decompressed data packet to a higher layer,
**characterized by** that either the decompression module (901) comprises:
a first processing sub-module, configured to remove, by the PDCP layer, a PDCP header from the data packet with the compressed TCP/IP header according to indication information in the PDCP header for indicating a length of the PDAP header; and
a first decompression sub-module, configured to remove, by an entity at the PDCP layer other than a compression entity configured by the PDCP layer, a PDAP header from the data packet with the compressed TCP/IP header, and perform, by the compression entity, a header decompression on the data packet except the PDCP header and the PDAP header, or
otherwise the decompression module (901) comprises:
a second decompression sub-module, configured to remove, by the PDAP layer, a PDAP header from the data packet with the compressed TCP/IP header, and perform, by a compression entity configured by the PDAP layer, a header decompression on the data packet with the compressed TCP/IP header that is subjected to the PDAP header removal.

## Patentansprüche

1. Verfahren, das von der Übertragungsseite eines Endgeräts zur Datenübertragung durchgeführt wird, umfassend:
Komprimieren (101), für ein Datenpaket mit einem TCP/IP-Header, des TCP/IP-Headers durch eine Packet Data Adaptation Protocol-, PDAP-, Schicht oder eine Packet Data Convergence Protocol-, PDPC-, Schicht, um ein Datenpaket mit dem komprimierten TCP/IP-Header zu erhalten; und
Hinzufügen (102) eines PDCP-Headers in das Datenpaket mit dem komprimierten TCP/IP-Header und Übertragen eines Datenpakets mit dem komprimierten TCP/IP-Header und dem PDCP-Header an eine untere Schicht,
**dadurch gekennzeichnet, dass** das Komprimieren (101), für das Datenpaket mit dem TCP/IP-Header, des TCP/IP-Headers durch die PDCP-Schicht, um das Datenpaket mit dem komprimierten TCP/IP-Header zu erhalten, umfasst:
Hinzufügen, durch die PDAP-Schicht, eines PDAP-Headers in einen Kopf des Datenpakets mit dem TCP/IP-Header und Hinzufügen von Anzeigeinformationen zum Anzeigen einer Länge des PDAP-Headers in ein Datenpaket, das mit dem PDAP-Header hinzugefügt wird, um das Datenpaket mit dem PDAP-Header zu erhalten; und Übertragen des Datenpakets, das mit dem PDAP-Header hinzugefügt wird, an die PDCP-Schicht; und
Entfernen, durch eine Entität auf der PDCP-Schicht, die keine Komprimierungsentität ist, des PDAP-Headers aus dem Datenpaket, und Durchführen, durch die Komprimierungsentität an der PDCP-Schicht, einer Header-Komprimierung auf dem Datenpaket mit Ausnahme des PDAP-Headers, oder
wobei das Komprimieren (101), für das Datenpaket mit dem TCP/IP-Header, des TCP/IP-Headers durch die PDAP-Schicht, um das Datenpaket mit dem komprimierten TCP/IP-Header zu erhalten, umfasst:
Komprimieren, durch eine durch die PDAP-Schicht konfigurierte Komprimierungsentität, des TCP/IP-Headers des Datenpakets und Hinzufügen eines PDAP-Headers in das komprimierte Datenpaket, um das Datenpaket mit dem komprimierten TCP/IP-Header zu erhalten.

2. Verfahren zur Datenübertragung nach Anspruch 1, wobei das Entfernen, durch die Entität an der PDCP-Schicht, die nicht die Komprimierungsentität ist, des PDAP-Headers aus dem Datenpaket umfasst: Durchführen einer PDAP-Header-Entfernungsverarbeitung auf dem Datenpaket mit dem PDAP-Header gemäß den Anzeigeinformationen.

3. Verfahren zur Datenübertragung nach Anspruch 1, wobei das Hinzufügen (102) des PDCP-Headers in das Datenpaket mit dem komprimierten TCP/IP-Header und das Übertragen des Datenpakets mit dem komprimierten TCP/IP-Header und dem PDCP-Header an die untere Schicht umfasst:
Hinzufügen des PDAP-Headers und des PDCP-Headers in das Datenpaket mit dem komprimierten TCP/IP-Header;
Hinzufügen von Anzeigeinformationen zum Anzeigen einer Länge des PDAP-Headers in den PDCP-Header; und
Übertragen eines Datenpakets, das mit dem PDAP-Header, dem PDCP-Header und den Anzeigeinformationen hinzugefügt wird, an die untere Schicht.

4. Verfahren, das von der Empfangsseite eines Endgeräts zur Datenübertragung durchgeführt wird, umfassend:
Dekomprimieren (601), durch eine Packet Data Adaptation Protocol-, PDAP-, Schicht oder eine Packet Data Convergence Protocol-, PDCP-, Schicht, eines empfangenen Datenpakets mit einem komprimierten TCP/IP-Header, um das dekomprimierte Datenpaket zu erhalten, wobei der komprimierte TCP/IP-Header durch Komprimieren des TCP/IP-Headers des Datenpakets durch die PDAP-Schicht oder die PDCP-Schicht erhalten wird; und
Übertragen (602) des dekomprimierten Datenpakets an eine höhere Schicht,
**dadurch gekennzeichnet, dass** das Dekomprimieren (601), durch die PDCP-Schicht, des empfangenen Datenpakets mit dem komprimierten TCP/IP-Header umfasst:
Entfernen, durch die PDCP-Schicht, eines PDCP-Headers aus dem Datenpaket mit dem komprimierten TCP/IP-Header;
Entfernen, durch eine Entität an der PDCP-Schicht, die keine durch die PDCP-Schicht konfigurierte Komprimierungsentität ist, eines PDAP-Headers aus dem Datenpaket mit dem komprimierten TCP/IP-Header, gemäß Anzeigeinformationen in dem PDCP-Header zum Anzeigen einer Länge des PDAP-Headers, und Durchführen, durch die Komprimierungsentität, einer Header-Dekomprimierung auf dem Datenpaket mit Ausnahme des PDCP-Headers und des PDAP-Headers, oder
wobei das Dekomprimieren (601), durch die PDAP-Schicht, des empfangenen Datenpakets mit dem komprimierten TCP/IP-Header umfasst:
Entfernen, durch die PDAP-Schicht, eines PDAP-Headers aus dem Datenpaket mit dem komprimierten TCP/IP-Header und Durchführen, durch eine durch die PDAP-Schicht konfigurierte Komprimierungsentität, einer Header-Dekomprimierung auf dem Datenpaket mit dem komprimierten TCP/IP-Header, der der PDAP-Header-Entfernung unterzogen wird.

5. Endgerät, umfassend:
ein Komprimierungsmodul (701), das konfiguriert ist, um für ein Datenpaket mit einem TCP/IP-Header den TCP/IP-Header über eine Packet Data Adaptation Protocol-, PDAP- , Schicht oder eine Packet Data Convergence Protocol-, PDCP-, Schicht zu komprimieren, um ein Datenpaket mit dem komprimierten TCP/IP-Header zu erhalten; und
ein erstes Übertragungsmodul (702), das konfiguriert ist, um einen PDCP-Header in das Datenpaket mit dem komprimierten TCP/IP-Header einzufügen und ein Datenpaket mit dem komprimierten TCP/IP-Header und dem PDCP-Header an eine untere Schicht zu übertragen,
**dadurch gekennzeichnet, dass** entweder das Komprimierungsmodul (701) umfasst:
ein erstes Verarbeitungsuntermodul, das konfiguriert ist, um durch die PDAP-Schicht, einen PDAP-Header in einen Kopf des Datenpakets mit dem TCP/IP-Header hinzuzufügen und Anzeigeinformationen zum Anzeigen einer Länge des PDAP-Headers in ein Datenpaket hinzuzufügen, das mit dem PDAP-Header hinzugefügt wird, um das Datenpaket mit dem PDAP-Header zu erhalten; und das Datenpaket, das mit dem PDAP-Header hinzugefügt wird, an die PDCP-Schicht zu übertragen; und
ein erstes Komprimierungsuntermodul, das konfiguriert ist, um, durch eine Entität an der PDCP-Schicht, die keine Komprimierungsentität ist, den PDAP-Header aus dem Datenpaket zu entfernen und um, durch die Komprimierungsentität an der PDCP-Schicht, eine Header-Komprimierung auf dem Datenpaket mit Ausnahme des PDAP-Headers durchzuführen, oder
anderweitig umfasst das Komprimierungsmodul (701):
ein zweites Komprimierungsuntermodul, das konfiguriert ist, um, durch eine durch die PDAP-Schicht konfigurierte Komprimierungsentität, den TCP/IP-Header des Datenpakets zu komprimieren und einen PDAP-Header in das komprimierte Datenpaket hinzuzufügen, um das Datenpaket mit dem komprimierten TCP/IP-Header zu erhalten.

6. Endgerät nach Anspruch 5, wobei das erste Komprimierungsuntermodul ferner konfiguriert ist zum:
Durchführen einer PDAP-Header-Entfernungsverarbeitung auf dem Datenpaket mit dem PDAP-Header gemäß den Anzeigeinformationen.

7. Endgerät nach Anspruch 5, wobei das erste Übertragungsmodul (702) ferner konfiguriert ist zum:
Hinzufügen des PDAP-Headers und des PDCP-Headers in das Datenpaket mit dem komprimierten TCP/IP-Header;
Hinzufügen von Anzeigeinformationen zum Anzeigen einer Länge des PDAP-Headers in den PDCP-Header; und
Übertragen eines Datenpakets, das mit dem PDAP-Header, dem PDCP-Header und den Anzeigeinformationen hinzugefügt wird, an die untere Schicht.

8. Endgerät, umfassend:
ein Dekomprimierungsmodul (901), das konfiguriert ist, um ein empfangenes Datenpaket mit einem komprimierten TCP/IP-Header durch eine Packet Data Adaptation Protocol-, PDAP-, Schicht oder eine Packet Data Convergence Protocol-, PDCP-, Schicht zu dekomprimieren, um das dekomprimierte Datenpaket zu erhalten, wobei der komprimierte TCP/IP-Header durch Komprimieren des TCP/IP-Headers des Datenpakets durch die PDAP-Schicht oder die PDCP-Schicht erhalten wird; und
ein zweites Übertragungsmodul (902), das konfiguriert ist, um das dekomprimierte Datenpaket an eine höhere Schicht zu übertragen,
**dadurch gekennzeichnet, dass** entweder das Dekomprimierungsmodul (901) umfasst:
ein erstes Verarbeitungsuntermodul, das konfiguriert ist, um, durch die PDCP-Schicht, einen PDCP-Header aus dem Datenpaket mit dem komprimierten TCP/IP-Header gemäß Anzeigeinformationen in dem PDCP-Header zum Anzeigen einer Länge des PDAP-Headers zu entfernen; und
ein erstes Dekomprimierungsuntermodul, das konfiguriert ist, um, durch eine Entität an der PDCP-Schicht, die keine durch die PDCP-Schicht konfigurierte Komprimierungsentität ist, einen PDAP-Header aus dem Datenpaket mit dem komprimierten TCP/IP-Header zu entfernen und um, durch die Komprimierungsentität, eine Header-Dekomprimierung auf dem Datenpaket mit Ausnahme des PDCP-Headers und des PDAP-Headers durchzuführen, oder
anderweitig umfasst das Dekomprimierungsmodul (901):
ein zweites Dekomprimierungsuntermodul, das konfiguriert ist, um, durch die PDAP-Schicht, einen PDAP-Header aus dem Datenpaket mit dem komprimierten TCP/IP-Header zu entfernen und um, durch eine durch die PDAP-Schicht konfigurierte Komprimierungsentität, eine Header-Dekomprimierung auf dem Datenpaket mit dem komprimierten TCP/IP-Header durchzuführen, der der PDAP-Header-Entfernung unterzogen wird.

## Revendications

1. Procédé exécuté par l'extrémité de transmission d'un terminal de transmission de données, comprenant :
compresser (101), pour un paquet de données avec un en-tête TCP/IP, l'en-tête TCP/IP par une couche de protocole d'adaptation de données par paquets, PDAP, ou une couche de protocole de convergence de données par paquets, PDCP, pour obtenir un paquet de données avec l'en-tête TCP/IP compressé ; et
ajouter (102) un en-tête PDCP dans le paquet de données avec l'en-tête TCP/IP compressé et transmettre un paquet de données avec l'en-tête TCP/IP compressé et l'en-tête PDCP à une couche inférieure,
**caractérisé par le fait que** la compression (101), pour le paquet de données avec l'en-tête TCP/IP, de l'en-tête TCP/IP par la couche PDCP pour obtenir le paquet de données avec l'en-tête TCP/IP compressé comprend :
ajouter, par la couche PDAP, un en-tête PDAP dans une tête du paquet de données avec l'en-tête TCP/IP, et ajouter des informations d'indication pour indiquer une longueur de l'en-tête PDAP dans un paquet de données qui est ajouté à l'en-tête PDAP, pour obtenir le paquet de données avec l'en-tête PDAP ; et transmettre le paquet de données qui est ajouté à l'en-tête PDAP à la couche PDCP ; et
supprimer, par une entité à la couche PDCP autre qu'une entité de compression, l'en-tête PDAP du paquet de données, et réaliser, par l'entité de compression à la couche PDCP, une compression d'en-tête sur le paquet de données à l'exception de l'en-tête PDAP, ou
dans lequel la compression (101), pour le paquet de données avec l'en-tête TCP/IP, de l'en-tête TCP/IP par la couche PDAP afin d'obtenir le paquet de données avec l'en-tête TCP/IP compressé, comprend :
compresser, par une entité de compression configurée par la couche PDAP, l'en-tête TCP/IP du paquet de données, et ajouter un en-tête PDAP dans le paquet de données compressé, afin d'obtenir le paquet de données avec l'en-tête TCP/IP compressé.

2. Procédé de transmission de données selon la revendication 1, dans lequel la suppression, par l'entité à la couche PDCP autre que l'entité de compression, de l'en-tête PDAP du paquet de données comprend : exécuter un traitement de suppression de l'en-tête PDAP sur le paquet de données avec l'en-tête PDAP selon les informations d'indication.

3. Procédé de transmission de données selon la revendication 1, dans lequel l'ajout (102) de l'en-tête PDCP dans le paquet de données avec l'en-tête TCP/IP compressé et la transmission du paquet de données avec l'en-tête TCP/IP compressé et l'en-tête PDCP à la couche inférieure comprend :
ajouter l'en-tête PDAP et l'en-tête PDCP dans le paquet de données avec l'en-tête TCP/IP compressé ; ajouter des informations d'indication pour indiquer une longueur de l'en-tête PDAP dans l'en-tête PDCP ; et transmettre un paquet de données qui est ajouté à l'en-tête PDAP, l'en-tête PDCP et les informations d'indication à la couche inférieure.

4. Procédé exécuté par l'extrémité de réception d'un terminal pour la transmission de données, comprenant :
décompresser (601), par une couche de protocole d'adaptation de données par paquets, PDAP, ou une couche de protocole de convergence de données par paquets, PDCP, un paquet de données reçu avec un en-tête TCP/IP compressé pour obtenir le paquet de données décompressé, dans lequel l'en-tête TCP/IP compressé est obtenu par compression de l'en-tête TCP/IP du paquet de données par la couche PDAP ou la couche PDCP ; et
transmettre (602) le paquet de données décompressé à une couche supérieure,
**caractérisé par le fait que** la décompression (601), par la couche PDCP, du paquet de données reçu avec l'en-tête TCP/IP compressé comprend :
supprimer, par la couche PDCP, un en-tête PDCP du paquet de données avec l'en-tête TCP/IP compressé ;
supprimer, par une entité à la couche PDCP autre qu'une entité de compression configurée par la couche PDCP, un en-tête PDAP du paquet de données avec l'en-tête TCP/IP compressé selon les informations d'indication dans l'en-tête PDCP pour indiquer une longueur de l'en-tête PDAP, et exécuter, par l'entité de compression, une décompression de l'en-tête sur le paquet de données à l'exception de l'en-tête PDCP et de l'en-tête PDAP, ou dans lequel la décompression (601), par la couche PDAP, du paquet de données reçu avec l'en-tête TCP/IP compressé comprend :
supprimer, par la couche PDAP, un en-tête PDAP du paquet de données avec l'en-tête TCP/IP compressé, et effectuer, par une entité de compression configurée par la couche PDAP, une décompression de l'en-tête sur le paquet de données avec l'en-tête TCP/IP compressé qui est soumis à la suppression de l'en-tête PDAP.

5. Terminal, comprenant :
un module de compression (701), configuré pour compresser, pour un paquet de données avec un en-tête TCP/IP, l'en-tête TCP/IP à travers une couche de protocole d'adaptation de données par paquets, PDAP, ou une couche de protocole de convergence de données par paquets, PDCP, pour obtenir un paquet de données avec l'en-tête TCP/IP compressé ; et
un premier module de transmission (702) configuré pour ajouter un en-tête PDCP dans le paquet de données avec l'en-tête TCP/IP compressé et transmettre un paquet de données avec l'en-tête TCP/IP compressé et l'en-tête PDCP à une couche inférieure,
**caractérisé par le fait que** le module de compression (701) comprend soit :
un premier sous-module de traitement, configuré pour ajouter, par la couche PDAP, un en-tête PDAP dans une tête du paquet de données avec l'en-tête TCP/IP, et ajouter des informations d'indication pour indiquer une longueur de l'en-tête PDAP dans un paquet de données qui est ajouté à l'en-tête PDAP, pour obtenir le paquet de données avec l'en-tête PDAP ; et transmettre le paquet de données qui est ajouté à l'en-tête PDAP à la couche PDCP ; et
un premier sous-module de compression, configuré pour supprimer, par une entité à la couche PDCP autre qu'une entité de compression, l'en-tête PDAP du paquet de données, et exécuter, par l'entité de compression à la couche PDCP, une compression d'en-tête sur le paquet de données à l'exception de l'en-tête PDAP, ou
sinon le module de compression (701) comprend :
un second sous-module de compression, configuré pour compresser, par une entité de compression configurée par la couche PDAP, l'en-tête TCP/IP du paquet de données, et ajouter un en-tête PDAP dans le paquet de données compressé, afin d'obtenir le paquet de données avec l'en-tête TCP/IP compressé.

6. Terminal selon la revendication 5, dans lequel le premier sous-module de compression est de plus configuré pour :
exécuter un traitement de suppression de l'en-tête PDAP sur le paquet de données avec l'en-tête PDAP selon les informations d'indication.

7. Terminal selon la revendication 5, dans lequel le premier module de transmission (702) est de plus configuré pour :
ajouter l'en-tête PDAP et l'en-tête PDCP dans le paquet de données avec l'en-tête TCP/IP compressé ; ajouter des informations d'indication pour indiquer une longueur de l'en-tête PDAP dans l'en-tête PDCP ; et transmettre un paquet de données qui est ajouté à l'en-tête PDAP, l'en-tête PDCP et les informations d'indication à la couche inférieure.

8. Terminal, comprenant :
un module de décompression (901), configuré pour décompresser un paquet de données reçu avec un en-tête TCP/IP compressé à travers une couche de protocole d'adaptation de données par paquets, PDAP, ou une couche de protocole de convergence de données par paquets, PDCP, afin d'obtenir le paquet de données décompressé, dans lequel l'en-tête TCP/IP compressé est obtenu en compressant l'en-tête TCP/IP du paquet de données par la couche PDAP ou la couche PDCP ; et
un second module de transmission (902) configuré pour transmettre le paquet de données décompressé à une couche supérieure,
**caractérisé par le fait que** le module de décompression (901) comprend soit :
un premier sous-module de traitement, configuré pour supprimer, par la couche PDCP, un en-tête PDCP du paquet de données avec l'en-tête TCP/IP compressé selon les informations d'indication dans l'en-tête PDCP pour indiquer une longueur de l'en-tête PDAP ; et
un premier sous-module de décompression, configuré pour supprimer, par une entité à la couche PDCP autre qu'une entité de compression configurée par la couche PDCP, un en-tête PDAP du paquet de données avec l'en-tête TCP/IP compressé, et exécuter, par l'entité de compression, une décompression d'en-tête sur le paquet de données à l'exception de l'en-tête PDCP et de l'en-tête PDAP, ou sinon le module de décompression (901) comprend :
un deuxième sous-module de décompression configuré pour supprimer, par la couche PDAP, un en-tête PDAP du paquet de données avec l'en-tête TCP/IP compressé, et exécuter, par une entité de compression configurée par la couche PDAP, une décompression de l'en-tête sur le paquet de données avec l'en-tête TCP/IP compressé qui est soumis à la suppression de l'en-tête PDAP.
